# EUROPÄISCHE PATENTANMELDUNG

(11) **EP 1 158 238 A1**
(43) Veröffentlichungstag der Anmeldung: **28.11.2001**
(21) Anmeldenummer: 00810448.1
(22) Anmeldetag: 23.05.2000
(51) Int. Cl.: F16M 11/04, F16M 11/14

(54) **Apparate-Haltevorrichtung**

(71) Anmelder: USM Holding AG, 3073 Gümligen (CH)
(72) Erfinder: Schärer, Alexander, 3011 Bern (CH); Cassani, Antonio, 3110 Münsingen (CH); Stöckli, Kaspar, 3629 Kiesen (CH); Künzi, Stephan, 3074 Muri b. Bern (CH)
(74) Vertreter: Roshardt, Werner Alfred, Dipl.-Phys.

(57) **Zusammenfassung**

Eine Haltevorrichtung (1) für eine Apparatebefestigung ist derart ausgebildet, dass diese Vorrichtung in Bezug auf ein einmal eingestelltes Gewicht im gesamten Schwenkbereich ausbalanciert ist. Eine solche Haltevorrichtung (1) besteht aus einer eigentlichen Tragkonstruktion (3), welche durch ein elastisches Element gestützt wird und einer Verstellvorrichtung (8), welche einen der Angriffspunkte des elastischen Elements je nach Belastung verändern kann. Die Verstellvorrichtung (8) ist starr geneigt an einem Befestigungselement (2) angeordnet und bezüglich einer Lotrechten einen Winkel einschliesst.

## Beschreibung

Die Erfindung betrifft eine Haltevorrichtung für einen Apparat, insbesondere für einen Bildschirm, welche eine Tragkonstruktion umfasst. Diese Tragkonstruktion weist ein elastisches Element und eine Verstellvorrichtung auf, welche entlang einer Verstellachse eine Verstellung eines Angriffspunktes des elastischen Elements ermöglicht. Durch die konstruktive Ausbildung ist die Haltevorrichtung mit einem daran befestigten Apparat über den gesamten Schwenkbereich im Wesentlichen ausbalanciert.

### Stand der Technik

Aus dem Stand der Technik sind verschiedenste Haltevorrichtungen für Bildschirme bekannt. Durch die zunehmende Verbreitung von Flachbildschirmen werden jedoch neue und andere Anforderungen an eine entsprechende Haltevorrichtung gestellt.

Aus der US 5,842,672 ist eine solche Haltevorrichtung dargestellt, welche mit einer mehrgelenkigen Tragvorrichtung eine Befestigung eines Flachbildschirms ermöglicht. Die Fixierung der verschiedenen Gelenke der Tragvorrichtung erfolgt über Friktionsscheiben. Für die Bewegungssteuerung wird eine Gasdruckfeder verwendet, wobei die Bewegungen auf die vertikale Richtung begrenzt sind. Durch den Konstruktionsaufbau ist bei wechselnder Belastung eine Ausbalancierung, beispielsweise durch den Wechsel des Bildschirms, insbesondere im oberen und unteren Bereich des Schwenkbereichs nicht mehr gewährleistet.

In der DE-OS 41 11 408 A1 wird ein Tragarm für Computergeräte offenbart, welcher aus einem Parallelogramm gebildet wird und eine Teleskopeinheit mit einer Gasfeder aufweist. Da das Kraftdreieck seine Grösse beibehält und der Druck der Gasfeder konstant bleibt, ist der Tragarm selbsthemmend. Durch die Art der Konstruktion ist der Schwenkbereich sehr begrenzt.

Zur Fixierung von Kugelgelenken sind verschiedene Systeme beispielsweise mit einer Hydraulik, Klemmringen (z. B. DE 32 39 208 A1), Federelementen (z. B. US 3,951,557) und Klemmen (z. B. US 4,765,580) bekannt. Gerade bei den Lösungsansätzen mit Klemmen konnte keine sichere Fixierung erstellt werden. Aufgrund der kleinen Angriffsfläche einer Klemme kann der erforderliche Kraftaufwand für die Fixierung nicht auf die Kugelfläche aufgebracht werden. In der CH 519 117 wird ein feststellbares Kugelgelenk offenbart, bei dem der Klemmdruck über ein Feststellorgan auf die Kugel übertragen wird und somit grössere Belastungen übernommen werden können.

Die bekannten Haltevorrichtungen für Bildschirme weisen entweder mehrgelenkige, komplizierte Konstruktionen auf oder werden meistens mit Gasdruckfedern in ihren möglichen Bewegungsfreiheiten gesteuert, was zu aufwendigen und kostenintensiven Ausführungen führt. Wird einmal eine eingestellte Belastung z. B. durch einen Wechsel eines Bildschirms verändert, ist eine neue Einstellung nur bedingt durch jeden Benutzer durchführbar. Im oberen und unteren Bewegungsbereich, vor allem bei Bewegungen in vertikaler Richtung, findet bei den meisten Konstruktionen des Standes der Technik ein sogenanntes "Nachlaufen" der Haltevorrichtung statt, da die belastungsgemässen Einstellungen besonders in den oberen und unteren Bereichen des Schwenkbereichs nicht mehr optimal eingestellt sind.

Alle bekannten Systeme befriedigen für die heutigen und zukünftigen Bedürfnisse nicht, welche an eine Apparate-Haltevorrichtung gestellt werden.

### Darstellung der Erfindung

Aufgabe der Erfindung ist es, eine Haltevorrichtung der eingangs genannten Art zu schaffen, welche in ihrem gesamten Schwenkbereich vom Benutzer schnell und einfach ausbalanciert werden kann.

Die Lösung der Aufgabe ist durch die Merkmale des Anspruchs 1 definiert. Gemäss der Erfindung umfasst eine Haltevorrichtung für einen Apparat, insbesondere für einen Bildschirm eine Tragkonstruktion, welche ein elastisches Element und eine Verstellvorrichtung aufweist. Entlang einer Verstellachse der Verstellvorrichtung wird einer Verstellung eines Angriffspunktes des elastischen Elementes ermöglicht. Die Erfindung zeichnet sich dadurch aus, dass die Verstellvorrichtung starr geneigt angeordnet ist. Die Verstellachse der Verstellvorrichtung schliesst bezüglich einer Lotrechten einen Winkel ein.

Der Ausgleich des Drehmoments, welches durch einen an der Haltevorrichtung angebrachten Apparat entsteht, erfolgt durch das elastische Element, welches mit einem Befestigungspunkt an der geneigt angeordneten Verstellvorrichtung angreift. Durch die geneigte Anordnung der Verstellvorrichtung ist im Vergleich zu einer lotrecht angeordneten Verstellvorrichtung ein grösserer Einstellbereich möglich. Gleichzeitig wird die Bedienungsfreundlichkeit einer solchen Verstellvorrichtung erhöht, da die Einstellungen ausserhalb der Befestigungspunkte der Tragkonstruktion vorgenommen werden können.

Des Weiteren wird durch die geneigte Anordnung der Verstellvorrichtung auch in den oberen und unteren Schwenkbereichen der Haltevorrichtung ein sogenanntes "Nachlaufen" verhindert, wenn die entsprechende Belastung eingestellt wurde.

Durch die geneigte Anordnung der Verstellvorrichtung bleibt bei einer einmal eingestellten Belastung das Gleichgewicht über den gesamten Schwenkbereich der Haltevorrichtung gewährleistet. Dies auch bei der bevorzugten Ausbildung mit einer vorgespannten Spiralfeder. Indem der Angriffspunkt auf einer vorgegebenen Achse verstellt wird, können mit ein und derselben Ausführungsform verschiedene Tragfähigkeiten der Haltevorrichtung aufgenommen werden.

Durch den einfachen Aufbau der ausbalancierten Haltevorrichtung werden alle Anforderungen erfüllt, welche an eine solche gestellt werden. Anpassungen aufgrund einer wechselnden Belastung, beispielsweise durch einen neuen Flachbildschirm können von jedem Benutzer selbst, einfach und bei Beibehaltung der vorteilhaften Eigenschaften der Haltevorrichtung durchgeführt werden.

An dieser Haltevorrichtung kann jede Art eines Apparates befestigt werden, sofern die maximale Tragfähigkeit der Haltevorrichtung nicht überschritten wird. Die einzelnen Komponenten der Haltevorrichtung werden auf einen vorher definierten Gewichtsbereich ausgerichtet.

Bevorzugt werden an solchen Haltevorrichtungen Bildschirme und dabei insbesondere Flachbildschirme befestigt. Eine bevorzugte Ausführungsform der Haltevorrichtung ergibt sich bei einer Tragfähigkeit derselben in der Grössenordnung bis 10 kg.

Insbesondere im Bereich des Winkels der Verstellachse der Verstellvorrichtung von 45° bis 60° bezogen auf eine Lotrechte ist die Haltevorrichtung leicht ausbalancierbar. In dem erweiterten Bereich von 30° bis 75° kann die Haltevorrichtung mit einfachsten Mitteln ausbalanciert werden. Würde eine Haltevorrichtung ausserhalb dieses Bereiches angewendet, müssten teils aufwendige Massnahmen getroffen werden. So könnten z. B. Friktionsscheiben angeordnet werden, welche das sogenannte "Nachlaufen" verhindern würden. Solche Massnahmen weisen jedoch einen hohen Verschleiss auf und sind oft kompliziert in ihrem Aufbau, so dass damit eine grosse Anfälligkeit auf Störungen gegeben wäre. Weiter wäre es dem durchschnittlichen Benutzer nur beschränkt möglich, eine solche Haltevorrichtung bei Bedarf zu justieren.

Wird einer der Befestigungspunkte des elastischen Elements verändert, ändert sich die Tragfähigkeit der gesamten Haltevorrichtung. Bei einer Änderung der Belastung der Haltevorrichtung wird diese mittels der Verstellvorrichtung wieder in das Gleichgewicht gebracht und die Haltevorrichtung ist wieder über den gesamten Schwenkbereich ausbalanciert. Eine Änderung der Belastung kann sich beispielsweise bei einem Apparatewechsel ergeben. Bevorzugt wird die Verstellvorrichtung an dem Befestigungselement der Haltevorrichtung angeordnet. Durch diese Verstellvorrichtung bleibt die Haltevorrichtung auch über mehrere Generationen von Geräten insbesondere von Bildschirmen einsetzbar.

Eine bevorzugt ausgebildete Verstellvorrichtung für einen der Angriffspunkte des elastischen Elements besteht aus einer Gewindestange mit einer vorgegebenen Achse und einem Befestigungsteil, welches die Befestigung des elastischen Elements an der Verstellvorrichtung ermöglicht. Durch Drehen der Gewindestange wird die Lage des Befestigungsteils und somit die Lage des Angriffspunktes des elastischen Elementes entlang der Achse der Gewindestange verschoben. Dadurch wird die Haltevorrichtung auf die vorhandene Belastung eingestellt. Je länger die Gewindestange der Verstellvorrichtung ausgebildet ist, desto grösser ist der einstellbare Tragfähigkeitsbereich der Haltevorrichtung.

Als Alternative dazu kann auch das Befestigungsteil selbst mit einem Gewinde ausgebildet sein, welches eine Einstellung entlang der Gewindestange ermöglicht. Dabei wäre das elastische Element beispielsweise mit einem gebogenen Ende (Haken, Schlaufe) innerhalb einer Ausnehmung des Befestigungsteils befestigt, so dass das Befestigungsteil gedreht werden kann. Weiter kann auch das Befestigungsteil derart ausgebildet sein, dass es entlang der Gewindestange gleiten kann. Die genaue Position wird durch eine Mutter fixiert, welche auch ein Verstellen des Angriffspunktes des elastischen Elementes ermöglicht. Durch die Kraft, welche das elastische Element auf das Befestigungsteil ausübt wird ein unerwünschtes Verschieben dessen weitgehend verhindert. In einer weiteren Variante wird anstatt einer Gewindestange ein normaler Stabstahl verwendet. Dieser ist gerillt oder vorzugsweise glatt ausgebildet und beispielsweise mit mehreren Bohrungen versehen. In diesen Bohrungen wird ein Bolzen eingesetzt. Der Bolzen weist beispielsweise eine Länge auf, die dem dreifachen Durchmesser des verwendeten Stabstahls entspricht. Daran wird das elastische Element beispielsweise wieder mit einem gebogenen Ende eingehängt. Anstatt den Stabstahl mit Bohrungen zu versehen kann dieser auch einseitige Ausnehmungen aufweisen, in denen das elastische Element mit einem gebogenen Ende eingehängt werden kann. Hierbei ist jedoch die Einstellung für den Gewichtsausgleich eingeschränkter als bei den vorher ausgeführten Varianten. Daneben sind weitere konstruktive Ausgestaltungen der Verstellvorrichtungen denkbar, solange zumindest einer der Befestigungspunkte des elastischen Elements verstellt werden kann.

Bevorzugt ist das elastische Element innerhalb der Tragkonstruktion diagonale angeordnet. Bei einer bevorzugten Ausgestaltung der Tragkonstruktion als Parallelogramm versteht sich die diagonale Anordnung von dem oberen Gelenkpunkt des Parallelogramms beispielsweise bei der Befestigung des Apparates, zu der Verstellvorrichtung, welche an dem unteren Befestigungselement angeordnet ist. Die Wirkungslinie des elastischen Elements führt dabei knapp unterhalb des unteren Gelenkpunktes bei dem Befestigungselement vorbei. Je nach konstruktiver Ausgestaltung der Tragkonstruktion wird der Winkel zwischen der Tragkonstruktion und der Wirkungslinie des elastischen Elements angepasst.

Die Tragfähigkeit der Haltevorrichtung hängt einerseits von der Art des elastischen Elementes, der Geometrie der Tragkonstruktion und andererseits von den Angriffspunkten des elastischen Elementes ab. Entsprechend der Veränderung eines Teils dieses Systems verändert sich die Tragfähigkeit der gesamten Haltevorrichtung.

An seinem einen Ende weist die Haltevorrichtung ein Befestigungselement auf, welches eine Befestigung der Haltevorrichtung an einem Möbelstück, an einer Stange oder etwas ähnlichem ermöglicht. Das Befestigungselement kann auch derart ausgebildet sein, dass die Haltevorrichtung direkt an einer Wand befestigt werden kann. In einer bevorzugten Ausführungsform ist dieses Befestigungselement jedoch derart ausgebildet, dass die gesamte Haltevorrichtung um eine vertikale Achse schwenkbar ist, welche beispielsweise durch das Befestigungselement verläuft.

Heutige Büroeinrichtungen gewähren den Benutzern eine hohe Flexibilität. Aus diesem Grund müssen auch sämtliche Zubehörteile insbesondere eines Büromöbelsystems diesem Anspruch genügen. So ist eine Befestigung des Befestigungselementes der erfindungsgemässen Haltevorrichtung beispielsweise mittels einer Klemme an einer Platte eines Arbeitstisches oder an einer vertikalen Stange denkbar. Dabei kann eine allgemein verwendbare, d. h. an handelsübliche Tische oder ähnlichem anbringbare oder eine spezielle Befestigungsmöglichkeit vorgesehen sein, welche nur auf ein bestimmtes Möbelsystem ausgerichtet ist.

Das Befestigungselement kann auch derart ausgebildet sein, dass die Tragkonstruktion um das Befestigungselement schwenkbar ist. In einer solchen Ausgestaltung wird das Befestigungselement vorzugsweise zweiteilig ausgebildet. Ein Teil, welcher beispielsweise fest mit einem Tisch verbunden ist und ein Teil, welcher an dem fest verbundenen Teil um eine vertikale Achse schwenkbar ist. Durch diese konstruktive Massnahme kann die Verstellvorrichtung weiterhin an dem Befestigungselement angeordnet sein und es ist keine zusätzliche Konstruktion nötig.

Damit eine optimale Höhenverstellung eines befestigten Apparates möglich ist und eine Kompaktheit der Konstruktion gegeben ist, wird die Tragkonstruktion vorzugsweise in Form eines Parallelogramms ausgestaltet.

Das eine Parallelenpaar wird durch zumindest zwei Arme und das andere Parallelenpaar wird durch oben und unten angeordnete Befestigungselemente gebildet. Die Arme und die Befestigungselemente sind vorzugsweise gelenkig miteinander verbunden. Dabei können die Arme aus U-förmigen oder kastenförmigen Metallprofilen gebildet sein. Daneben ist auch die Verwendung von Flachstahl, Rundprofilen oder Ähnlichem für die konstruktiven Elemente denkbar.

Der Gewichtsausgleich der Haltevorrichtung erfolgt durch das elastische Element. Von Vorteil handelt es sich dabei um ein Federelement, bevorzugt um eine Spiralfeder. Daneben sind auch Ausführungen beispielsweise mit einem hydraulischen oder pneumatischen elastischen Element denkbar. Die Spiralfeder kann prinzipiell durch jedes elastische Element ersetzt werden, welches eine ähnliche oder eine gleiche Funktion wie diese Spiralfeder übernimmt. Damit auch hohe Belastungen mittels einer solchen Haltevorrichtung übernommen werden können, kann auch mehr als ein elastisches Element pro Haltevorrichtung vorgesehen werden.

Bei einer bevorzugten Ausbildung mit einer Spiralfeder wird diese bei der konstruktiven Ausgestaltung der Tragkonstruktion als Parallelogramm wie bereits beschrieben, diagonal im Gelenkparallelogramm angeordnet. Das eine Ende der Spiralfeder wird an der oberen gelenkigen Befestigung des oberen Armes an dem Befestigungselement für den Apparat gelenkig angebracht. Die Befestigung des anderen Endes der Spiralfeder erfolgt ebenfalls gelenkig an einer nachfolgend beschriebenen Verstelleinrichtung, welche diagonal gegenüber dem oberen Befestigungspunkt der Spiralfeder an dem Befestigungselement angeordnet ist.

Vorzugsweise ist die Spiralfeder vorgespannt. Die Vorspannkraft ist von der gewünschten Tragfähigkeit der Haltevorrichtung und der Lage von diesem abhängig. Für die bevorzugte Tragfähigkeit bis etwa 10 kg beträgt die Vorspannung der Spiralfeder in der unteren (angespannten) Position etwa doppelt so viel, wie im hochgeschwenkten (entspannten) Zustand der Haltevorrichtung.

Hauptsächlich werden an der erfindungsgemässen Haltevorrichtung Apparate und insbesondere Bildschirme befestigt. Grundsätzlich kann ein solcher Apparat direkt an einem Befestigungselement angebracht werden. In einer bevorzugten Variante wird der Apparat an der Kugel eines Kugelgelenks befestigt. Dabei wird für die Befestigung des Apparates an der Kugel des Kugelgelenks eine Befestigungsvorrichtung angeordnet, welche vorzugsweise aus einer Befestigungsplatte und einem Befestigungsstift besteht. Der Befestigungsstift ist seinerseits mit der Kugel des Kugelgelenks kraftschlüssig verbunden und dies bevorzugt derart, dass nur die von der Konstruktion des Kugelgelenks vorgesehenen Bewegungsfreiheiten durchführbar sind. Vorzugsweise handelt es sich bei der Befestigungsplatte um eine normierte Metallplatte, welche vorbereitete Bohrungen für die Befestigung der marktüblichen Produkte aufweisen.

Bevorzugt wird am einen Ende der Tragkonstruktion gegenüber dem Befestigungselement ein Kugelgelenk angeordnet. Dadurch ist es möglich, drei Gelenke in einem zu vereinigen und Bewegungen mit drei rotatorischen Freiheitsgraden zu ermöglichen. Damit ist ein daran befestigter Apparat um die horizontale und vertikale Achse schwenkbar. Des Weiteren ist eine Drehung senkrecht zur Ebene des Apparates möglich. Dies wird vor allem im grafischen Bereich gewünscht, wenn ein grundsätzlich auf Querformat eingestellter Bildschirm um die Rotationsachse der Befestigung auf Hochformat gedreht werden kann. Um eine vom Benutzer eingerichtete Stellung beizubehalten ist das Kugelgelenk mit zumindest einer Fixiervorrichtung ausgestattet, welche vorzugsweise zweiteilig aufgebaut ist.

Bei Kugelgelenken stellt sich bei der Fixierung eines eingestellten Zustandes ein besonderes Problem, wenn an der Kugel eine Belastung wirkt. Denn oft ist die wirkende Kraft, welche aus einer Belastung resultiert, auf eine zu fixierende Kugel derart gross, dass eine Gegenkraft, welche beispielsweise mittels einer Schraube auf die Kugel eines Kugelgelenks aufgebracht wird, zur Fixierung dieser Kugel nicht ausreicht. Bisher wurde die Sicherung von Kugelgelenken im allgemeinen mit Friktionsscheiben oder ähnlichem gelöst.

Indem gemäss einer bevorzugten Ausführungsform der Erfindung zwei Druckkörpern angeordnet sind, ist ein Reibungswiderstand derart vorhanden, dass eine sichere Fixierung gewährleistet ist. Diese Druckkörper werden vorzugsweise aus druckfestem Kunststoff hergestellt und weisen eine rohrähnliche Form auf. Bevorzugt sind diese Druckkörper in ihrer Wirkungslinie entgegengesetzt angeordnet. Ein Justierkörper, vorzugsweise eine Schraube, wirkt auf einen Druckkörper und gleichzeitig auf den gegenüber angeordneten Druckkörper, welche ihrerseits auf die zu fixierende Kugel wirken. Durch diesen Aufbau kann die Angriffsfläche einer Schraube auf eine Kugel derart vergrössert werden, dass trotz der relativ kleinen Angriffsfläche der Schraube eine Fixierung des Kugelgelenks auch bei einer grösseren Belastung gewährleistet wird. Neben der Ausführung der Druckkörper mit einer rohrähnlichen Form ist auch eine Ausgestaltung des Druckkörpers als ein kreiszylindrischer Körper mit einer auf die Kugel abgestimmten sphärischen konkaven Kontaktfläche denkbar.

Bevorzugt wird die Fixiervorrichtung so ausgebildet, dass die Feststellschraube von oben angezogen werden kann. In einer solchen Ausführung ist die Feststellschraube meistens leicht zugänglich. Die Fixiervorrichtung kann auch von unten oder von der Seite beispielsweise in einem x-beliebigen Winkel angeordnet werden. Die Anordnung der Fixiervorrichtung in vertikaler Richtung ist jedoch einer Anordnung in horizontaler Richtung vorzuziehen, da die Belastung infolge eines befestigten Apparates im Wesentlichen auch vertikal wirkt. Durch den daraus resultierenden markant längeren Hebelarm bei einer vertikalen Anordnung können bei gleicher Grösse der Haftreibung grössere Drehmomente aufgenommen werden. Damit können die Abmessungen der einzelnen Bestandteile im Vergleich zu einer horizontalen Anordnung der Fixiervorrichtung klein gehalten werden und der Verschleiss ist entsprechend kleiner.

Die Verwendung eines solchen Kugelgelenkes ist nicht auf die beschriebenen Haltevorrichtungen beschränkt. Gerade für Möbelsysteme ist es denkbar, das Kugelgelenk an einen in der Höhe unverschieblichen Halter zu befestigen, welcher seinerseits an einer in der Höhe verschieblichen Arbeitsfläche befestigt ist. Durch die vorhandenen Freiheitsgrade des Kugelgelenks kann auf benutzerspezifische Wünsche genügend Rücksicht genommen werden, auch wenn keinerlei Möglichkeiten bestehen die Haltevorrichtung selbst zu verschwenken. Um die Flexibilität zu erhöhen, kann die Haltevorrichtung derart ausgebildet werden, dass er von dem Benutzer weg bzw. zu dem Benutzer hin verstellt werden kann oder sogar eine Verschiebungsmöglichkeit zur Seite aufweist.

In einer Alternative zu der oben beschriebenen Ausbildung der Fixierung wird das Kugelgelenk mit zumindest einer Fixiervorrichtung ausgestattet, welche eine Grob- und Feinfixierung ermöglicht. Damit kann eine zusätzliche Sicherheit, insbesondere bei höheren Belastungen gewährleistet werden.

Eine andere Ausführungsform der Fixiervorrichtung für das Kugelgelenk weist mehrfach wirkende Elemente auf. Einerseits einen ersten Druckkörper, der vorzugsweise aus druckfestem Kunststoff hergestellt ist und eine rohrähnliche Form aufweist. Zur Erhöhung der Fixiereigenschaften, insbesondere der Verstärkung der hemmenden Reibungskräfte auf die Kugeloberfläche, kann an diesem ersten Druckkörper ein Kreisring angeordnet sein, welcher den gleichen Durchmesser wie der erste Druckkörper aufweist. Der Kreisring ist vorzugsweise aus einem elastischen Kunststoff hergestellt und leicht verformbar. Auf den ersten Druckkörper wirkt eine Justierschraube, welche eine durchgehende Bohrung aufweist. Diese erste Fixiervorrichtung dient im Wesentlichen der Grobfixierung des Kugelgelenks.

Zur Schaffung einer Feinjustierung ist innerhalb der ersten Fixiervorrichtung eine zweite Vorrichtung angeordnet. Diese besteht aus einem zweiten Druckkörper, der bevorzugt aus einem elastischen Kunststoff hergestellt und in Form einer Scheibe ausgebildet ist, welcher dem Innendurchmesser des rohrförmigen ersten Druckkörpers entspricht. An diesem zweiten Druckkörper greift eine zweite Schraube an, welche derart ausgebildet ist, dass diese durch die Bohrung der ersten Justierschraube auf diesen zweiten Druckkörper wirkt. Die durch die erste Justierschraube gehende Bohrung kann teilweise oder ganz mit einem Innengewinde versehen sein. Damit kann die zweite Justierschraube direkt an der ersten angreifen. Die zweite Justierschraube kann aber auch derart ausgebildet sein, dass sie als Bolzen in einer exzentrisch ausgebildeten Bohrung der ersten Justierschraube verkeilt wird.

Vorzugsweise wird an einer erfindungsgemässen Haltevorrichtung ein Bildschirm und insbesondere ein Flachbildschirm angebracht. Dies bedingt eine Zuführung mindestens eines Kabelstrangs. Um ein Aufwickeln dieses Kabelstrangs zu verhindern wird bevorzugt die Einstellmöglichkeit des Kugelgelenks zumindest um die Rotationsachse beispielsweise mit Festanschlägen beschränkt. Die Bewegungsfreiheit ist vorzugsweise auf eine Drehung von 90°, gegebenenfalls auf zweimal 90°, zu begrenzen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
Fig. 1 Eine Ansicht von der Seite einer erfindungsgemässen Haltevorrichtung;
Fig. 2 einen Schnitt durch eine erfindungsgemässe Verstellvorrichtung;
Fig. 3 eine Explosionsschnittzeichnung des Kugelgelenks; und
Fig. 4 eine Explosionszeichnung einer Variante des Kugelgelenks.

Grundsätzlich sind in den Figuren gleiche Teile mit gleichen Bezugszeichen versehen.

### Wege zur Ausführung der Erfindung

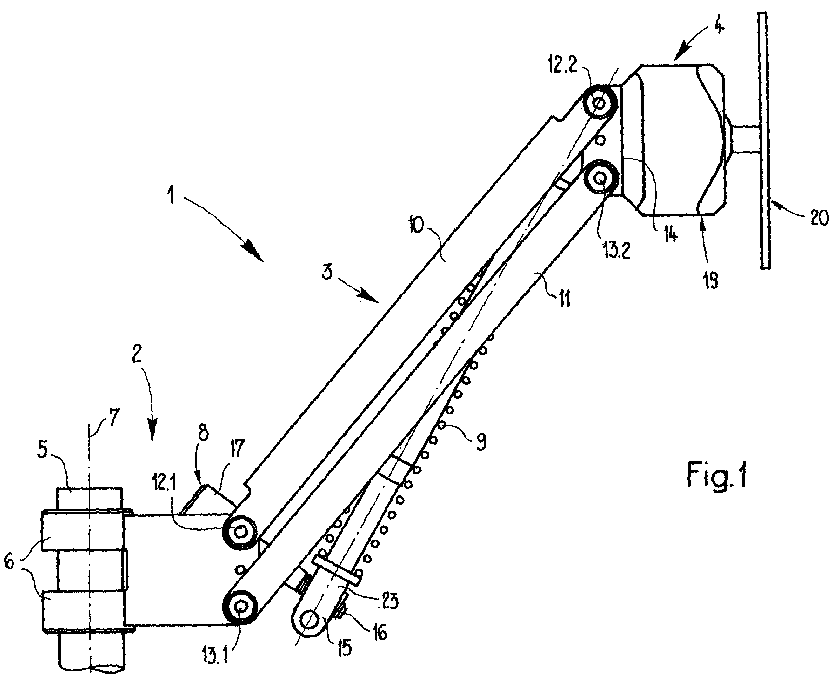

Figur 1 stellt eine Ansicht von der Seite einer erfindungsgemässen Haltevorrichtung 1 dar. Dieser umfasst ein Befestigungselement 2 zur Befestigung der Haltevorrichtung 1, eine Tragkonstruktion 3 und ein Befestigungselement 4 für die Befestigung eines Apparates. Bei dem zu befestigenden Apparat handelt es sich vorzugsweise um einen Bildschirm und insbesondere um einen Flachbildschirm.

Das Befestigungselement 2 ist derart ausgebildet, dass die Haltevorrichtung an einem Arbeitsplatz angebracht werden kann. Dieses Mittel zur Befestigung kann einerseits eine Klemmenkonstruktion sein, welche beispielsweise eine Befestigung direkt an einer Tischplatte ermöglicht. Bei einer solchen Befestigungsart kann das Befestigungselement 2 auch zweiteilig ausgebildet sein. Dabei ist ein Teil des Befestigungselements 2 fest, beispielsweise mit einer Tischplatte verbunden und ein anderer Teil des Befestigungselements 2 ist gelenkig daran befestigt. Andererseits kann beispielsweise wie in der Figur 1 dargestellt ein Tischbein derart über die Tischplatte verlängert werden, dass die Haltevorrichtung daran befestigt werden kann. Für eine solche Art der Befestigung weist das Befestigungselement 2 einen ösenförmigen Teil 6 auf, welcher monolithisch mit dem restlichen Teil des Befestigungselementes 2 verbunden ist und ein Überstülpen des Befestigungselementes 2 über die Verlängerung des Tischbeins 5 ermöglicht. Dadurch ist es möglich, die Haltevorrichtung 1 um eine vertikale Achse 7 zu schwenken, welche durch die Verlängerung des Tischbeins 5 läuft.

An dem mit dem ösenförmigen Teil 6 monolithisch verbundenen Teil des Befestigungselements 2 ist die Tragkonstruktion 3 gelenkig angeordnet. Des Weiteren ist vorzugsweise an diesem Teil des Befestigungselements 2 die Verstelleinrichtung 8 für einen der Angriffspunkte der Spiralfeder 9 angebracht.

Die Tragkonstruktion 3 besteht aus zwei Profilen 10 und 11, welche über ihre gelenkigen Verbindungen mit den Befestigungselementen 2 und 4 ein Parallelogramm bilden. Vorzugsweise sind die Profile 10 und 11 mittels auswechselbaren Bolzen 12 und 13 gelenkig an den Befestigungselementen 2 und 4 befestigt. Das obere Profil 10 ist einerseits mit dem Befestigungselement 2 und andererseits mit dem Befestigungselement 4 im oberen Bereich dieser Befestigungselemente 2 und 4 gelenkig verbunden. Das untere Profil 11 ist parallel zu dem oberen Profil 10, unterhalb von diesem gelenkig mit den Befestigungselementen 2 und 4 befestigt. Das untere Profil 11 weist vorzugsweise an den Befestigungspunkten die gleiche Breite wie das obere Profil 10 auf und umgreift das entsprechende Befestigungselement 2 bzw. 4 in der gleichen Art wie das Profil 10 gabelartig. Durch die Verwendung einer parallelogrammartigen Konstruktion wird eine kompakte Ausführung der Haltevorrichtung 1 und eine ausgezeichnete mechanische Stabilität erreicht.

Eine besonders belastbare und kompakte Ausbildung der Haltevorrichtung 1 ist gegeben, wenn die Profile 10 und 11 je nach Stellung der Haltevorrichtung 1 ineinandergreifen können. Dazu werden vorzugsweise U-förmige Profile verwendet. Dabei wird das untere U-Profil 11 in der Nähe der Befestigungselemente 2 und 4 um etwas mehr als die Wandstärke des oberen U-Profils 10 beidseitig nach innen abgekantet. Solche Abkantungen sind vorzugsweise so nah bei den Befestigungselementen angeordnet, dass keine Verkantung zwischen den Befestigungselementen 2 und 4, sowie dem unteren U-Profil 11 eintritt. Das obere U-Profil 10 weist an den beiden Längsenden seitlich beidseitig Ausnehmungen auf. Die Höhe der Ausnehmungen entspricht in etwa der halben Höhe des U-Profils 10. Die Grösse der Länge der Ausnehmungen ist derart gewählt, dass beim Berühren der gabelartigen Halterungen der beiden U-Profile 10 und 11 in dem oberen und unteren Schwenkbereich die Abkantungen die Kante nicht berühren. Durch die gabelartigen Laschen der U-Profile 10 und 11 wird der Schwenkbereich in vertikaler Richtung konstruktiv begrenzt.

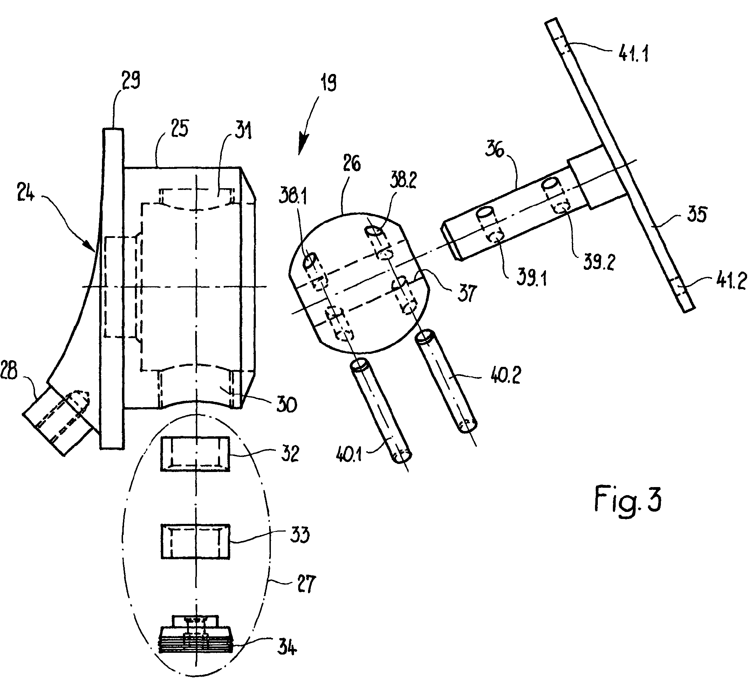

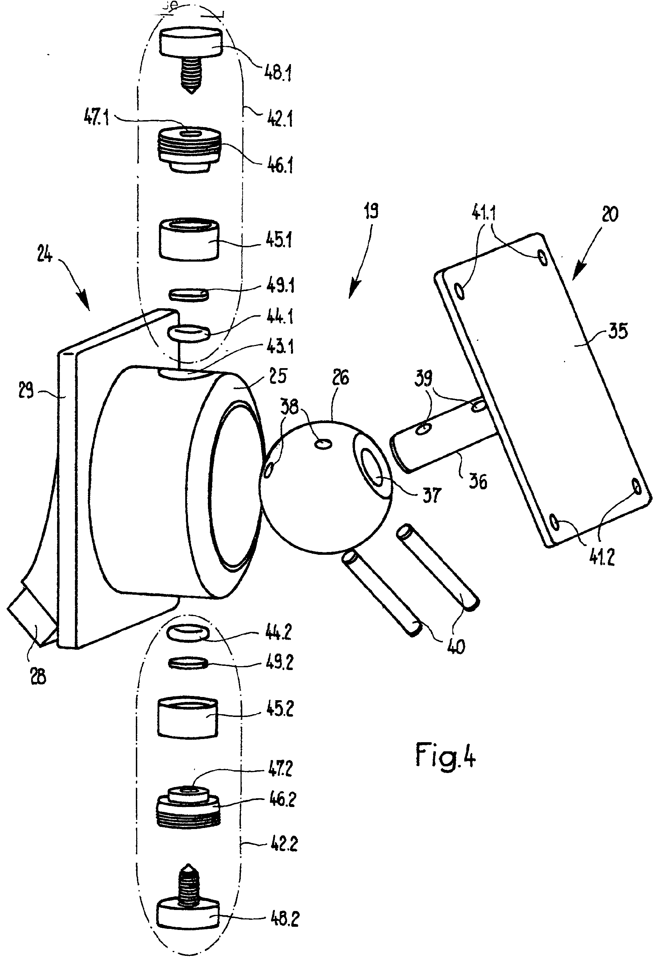

Das Befestigungselement 4 zur-Befestigung eines Apparates kann derart ausgebildet sein, dass an der Frontseite 14 des Befestigungselements 4 der gewünschte Apparat beispielsweise direkt angeschraubt werden kann. Mit dieser Ausführungsform sind die Einstellmöglichkeiten des Apparates jedoch auf eine Ausrichtung um die vertikale Achse 7 des verlängerten Tischbeins 5 und auf eine horizontale Ausrichtung beschränkt, welche durch den Schwenkbereich der parallelogrammartigen Tragkonstruktion 3 begrenzt werden. Ein Verschwenken des Apparates um die horizontale und vertikale Achse der Befestigung ist nicht möglich. Es wird deshalb bei einer bevorzugten Ausgestaltung der erfindungsgemässen Haltevorrichtung 1 an der Frontseite 14 ein Kugelgelenk 19 mit einer Befestigungsvorrichtung 20 zur Befestigung des Apparates angeordnet. Dieses Kugelgelenk 19 und die Befestigungsvorrichtung 20 werden mit ihren Einzelteilen detailliert in der Figur 3 bzw. 4 dargestellt.

Damit die Haltevorrichtung 1 in seinem gesamten Schwenkbereich ausbalanciert ist, wird an der eigentlichen Tragkonstruktion 3 der Haltevorrichtung 1 eine Spiralfeder 9 angeordnet. Diese Spiralfeder 9 ist einerseits an dem Bolzen 12.2 und andererseits an der Halterung 15 jeweils gelenkig befestigt. Die Verstelleinrichtung 8 befindet sich in einer bevorzugten Ausführungsform diagonal gegenüber dem Bolzen 12.2 an dem Befestigungselement 2.

Durch die Verstelleinrichtung 8 kann für einen bestimmten Gewichtsbereich über den gesamten Schwenkbereich der Haltevorrichtung 1 ein ausbalanciertes Verhalten dieser Haltevorrichtung 1 gewährleistet werden. Dies bleibt auch bei einem Auswechseln des befestigten Apparates und einer daraus ändernden Belastung gewährleistet. Je höher die Belastung ist, desto stärker muss folglich in der Hauptsache die Belastbarkeit der Spiralfeder 9 sein. Damit Apparategewichte bis etwa 10 kg von der Haltevorrichtung 1 übernommen werden können, wird die Spiralfeder 9 vorgespannt. Die wirkende Vorspannkraft liegt je nach Position der Haltevorrichtung 1 bei einer im oben genannten liegenden Belastung im Bereich von etwa 400 N bis 750 N. Nachdem ein Flachbildschirm an dem Befestigungselement 4 angebracht worden ist, wird die Lage des Angriffspunkts der Spiralfeder 9 mittels der Verstellvorrichtung 8 auf die vorhandene Belastung abgestimmt. Auch wenn in Zukunft die Flachbildschirme sehr viel leichter werden als die heute erhältlichen, so bleibt ein solche Haltevorrichtung 1 weiterhin einsetzbar.

Das Befestigungselements 2 weist vorzugsweise im oberen Drittel bezogen auf die gesamte Höhe dieses Elements eine Halterung 17 zur Aufnahme der Gewindestange 16 der Verstellvorrichtung 8 auf. Die Neigung der Gewindestange 16 ist fest vorgegeben und dahingehend optimiert, dass eine einmal eingestellte Belastung über den gesamten Schwenkbereich ausbalanciert ist. Der Winkel zwischen der Lotrechten und der Achse der Gewindestange 16 beträgt in der in den Figuren dargestellten Ausführung 53°. Je nach Ausbildung der Haltevorrichtung 1, insbesondere der Tragkonstruktion 3, kann dieser Winkel variieren.

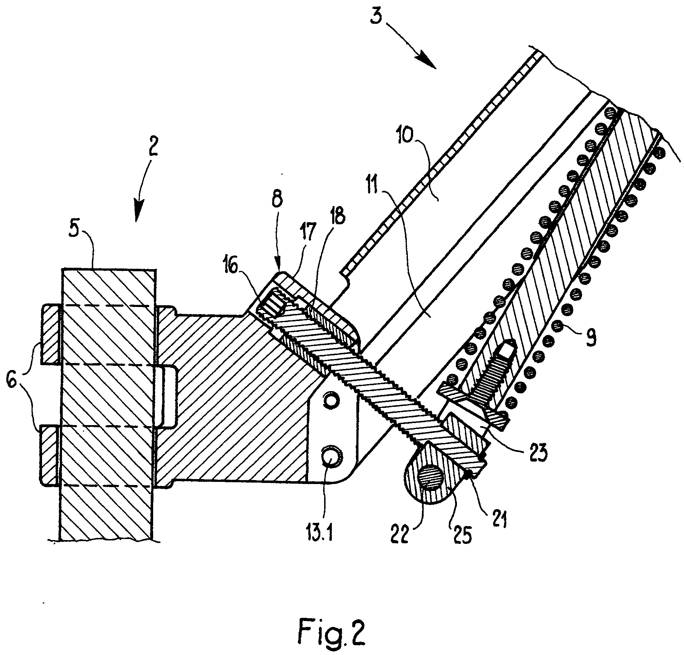

Figur 2 zeigt einen Schnitt durch die Haltevorrichtung 1, insbesondere durch die Verstellvorrichtung 8. Die Halterung 17 weist eine Ausnehmung auf, in der eine Messinggewindebüchse 18 angeordnet ist. Durch diese konstruktive Ausbildung wird verhindert, dass sich die Gewindestange 16, welche aus Stahl hergestellt ist, mit dem Befestigungselements 2 verklemmt, welches vorzugsweise aus Aluminiumdruckguss hergestellt wird. Die Gewindestange 16 weist an ihrem bei der Halterung 17 liegenden Ende ein Mittel auf, welches ein Drehen der Gewindestange 16 ermöglicht. In der vorliegenden Ausführungsform ist eine Vertiefung für einen Imbusschlüssel vorgesehen. Es könnte aber auch eine Vertiefung für einen Schraubenzieher oder gar eine Kurbel vorgesehen sein. Am gegenüberliegenden Ende der Gewindestange 16 ist die Halterung 15 für die Spiralfeder 9 vorzugsweise unverschieblich angebracht. Die Halterung 15 wird vorzugsweise auf das dementsprechend vorbereitete Ende der Gewindestange 16 aufgepresst und mit einem Sicherungsring 21 gesichert. Die Halterung kann aber auch angeschweisst oder angelötet sein. Des Weiteren könnte die gesamte Halterung 15 verschieblich gestaltet und beispielsweise in einer solchen Ausführung der Sicherungsring 21 durch eine Mutter ersetzt werden.

Wird die Gewindestange 16 gedreht, verändert sich die Lage der Halterung 15 dementsprechend. Wird ein Apparat an der Haltevorrichtung 1 befestigt, wird die Lage der Halterung 15 derart justiert, dass die Haltevorrichtung 1 über ihren gesamten Schwenkbereich ausbalanciert ist. Infolge der gelenkigen Lagerung der Spiralfeder 9 an der Halterung 15, passt sich die Spiralfeder 9 bei einer Veränderung des Angriffspunktes selbst an. Ändert sich zu einem späteren Zeitpunkt die Belastung, welche auf die Haltevorrichtung 1 wirkt, kann mit einer erneuten Justierung der Haltevorrichtung 1 durch den Benutzer selbst die Haltevorrichtung 1 den neuen Gegebenheiten angepasst werden.

In der bevorzugten Ausführungsform der Halterung 15 weist das elastische Element, hier die Spiralfeder 9, ein gabelförmiges Anschlussstück 23 auf. Dieses ist mit Öffnungen versehen, welche mit einer Öffnung in der Halterung 15 korrespondieren und eine gelenkige Befestigung der Spiralfeder 9 an der Verstellvorrichtung 8 bzw. der Gewindestange 16 über den Bolzen 22 ermöglicht.

Anhand der Figur 3 wird eine bevorzugte Ausführung eines Kugelgelenks 19 mit einer Befestigungsvorrichtung 20 für eine Befestigung beispielsweise eines Flachbildschirms in Form einer Explosionsschnittzeichnung dargestellt. Das gesamte Kugelgelenk 19 umfasst ein Kupplungsstück 24, eine Kugelpfanne 25, eine Kugel 26 sowie eine Fixiervorrichtung 27, welche aus zwei gegeneinander gerichteten Druckkörpern 32 und 33 besteht.

Das Kupplungsstück 24 seinerseits weist ein Befestigungselement 28 auf, welches eine Befestigung an dem Befestigungselement 4 der Haltevorrichtung 1 ermöglicht, und eine Halteplatte 29, an welcher die Kugelpfanne 25 angebracht ist. Es ist auch eine Ausführungsform denkbar, bei der das Befestigungselement 28 derart ausgebildet ist, dass die beiden Profile 10 und 11 der Tragkonstruktion 3 direkt an diesem befestigbar sind. Der Vorteil der ersten Variante liegt in einer Auswechselbarkeit des Kupplungsstückes, was dem Benutzer eine grössere Flexibilität bietet. So könnten je nach Art des befestigten Apparates verschiedene Befestigungselemente mit verschiedenen Funktionen angekuppelt werden.

An der Halteplatte 29 ist in diesem Ausführungsbeispiel auf der einen Seite die Kugelpfanne 25 des Kugelgelenks 19 und auf der anderen Seite das Befestigungselement 28 angebracht. Die Kugelpfanne 25 des Kugelgelenks 19 ist vorzugsweise rohrförmig ausgebildet und an einem Ende kraftschlüssig an der Halteplatte 29 befestigt. Diese kraftschlüssige Verbindung kann beispielsweise geschweisst sein. An dem gegenüberliegenden Ende ist die Kugelpfanne 25 derart ausgebildet, dass diese die Kugel 26 aufnimmt, welche innerhalb der Kugelpfanne 25 gleitet. Für die Fixiervorrichtung 27 ist in der Kugelpfanne 25 eine Öffnung 30 und gegenüber dazu angeordnet eine Ausnehmung 31 vorgesehen. Die Öffnung 30 wird vorzugsweise mit einem Innengewinde versehen an dem die Feststellschraube 34 angreifen kann.

Die Fixiervorrichtung 27 besteht aus einem ersten Druckkörper 32, welcher in der Ausnehmung 31 angeordnet ist, einem zweiten Druckkörper 33 und einer Feststellschraube 34. Die Kugel 26 wird zwischen diesen Druckkörpern 32 und 33 eingeklemmt, wenn die Feststellschraube 34 angezogen wird. Dafür ist die Feststellschraube 34 mit einem Mittel beispielsweise einer Vertiefung für einen Imbusschlüssel versehen. Die Druckkörper 32 und 33 sind vorzugsweise aus einem druckfesten Kunststoff hergestellt.

Die Befestigungsvorrichtung 20 besteht vorzugsweise aus einer eigentlichen Befestigungsplatte 35, an welcher der Apparat befestigt wird und einem Befestigungsstift 36, mit welchem die gesamte Befestigungsvorrichtung 20 an der Kugel 26 befestigbar ist. Die Kugel 26 des Kugelgelenks 19 weist eine dem Befestigungsstift 36 entsprechende und passgenaue Bohrung 37 auf. Des Weiteren ist die Kugel 26 bei der Bohrung 37 derart abgeflacht, dass eine bündige Ebene für die angeschlossene Befestigungsplatte 35 des Apparates entsteht. Aus herstellungstechnischen Gründen kann die Kugel 26 auch auf der gegenüberliegenden Seite der vorher beschriebenen Abflachung gleich ausgestaltet werden. Zur Sicherung und Befestigung der gesamten Befestigungsvorrichtung 20 an der Kugel 26 sind in der Kugel 26 und dem Befestigungsstift 36 korrespondierende Bohrungen 38 bzw. 39 für Bolzen 40 vorgesehen, welche die Befestigungsplatte 20 an der Kugel 26 des Kugelgelenks 19 sichern und diese kraftschlüssig verbinden.

Die Befestigungsplatte 35 ist mit Bohrlöchern 41 versehen. Diese Bohrlöcher 41 sind vorzugsweise auf die marktführenden Apparate abgestimmt, welche zur Befestigung an der Haltevorrichtung 1 vorgesehen sind. Es können auch Langlöcher angeordnet werden, welche auf verschiedene Modelle der gewünschten Apparatekategorie noch mehr Rücksicht nehmen.

In Figur 4 wird eine Variante des Kugelgelenks 19 in Form einer Explosionszeichnung dargestellt. Dabei umfasst das Kugelgelenk 19 neben dem Kupplungsstück 24, der Kugelpfanne 25, der Kugel 26, zwei gegeneinander gerichtete Fixiervorrichtungen 42.

Für die Fixiervorrichtungen 42.1 und 42.2 sind in der Kugelpfanne 25 zwei Öffnungen 43.1 und 43.2 vorgesehen. Diese Öffnungen 43.1 und 43.2 sind vertikal, gegeneinander angeordnet und durchdringen die Wanddicke der Kugelpfanne 25. Sie können jedoch in einem x-beliebigen Winkel angeordnet sein, wobei auch dabei eine gegeneinander ausgrichtete Anordnung der Fixiervorrichtungen 42.1 bzw. 42.2 bevorzugt wird.

Die Fixiervorrichtungen 42.1 bzw. 42.2 sind zweiteilig und innerhalb sich selbst, nochmals zweiteilig aufgebaut. Einerseits umfasst die Fixiervorrichtung 42.1 bzw. 42.2 eine Grobfixierung, welche aus einem Kontaktkörper 44.1 bzw. 44.2, einem Druckkörper 45.1 bzw. 45.2 und einer Feststellschraube 46.1 bzw. 46.2 besteht. Der Kontaktkörper 44.1 bzw. 44.2 ist vorzugsweise aus einem elastischen Kunststoff hergestellt und stellt den eigentlichen Kontakt zwischen der Kugel 26 und dem Druckkörper 45.1 bzw. 45.2 her. Der Druckkörper 45.1 bzw. 45.2 ist dagegen aus einem druckfesten Kunststoff hergestellt. An diesem greift die Feststellschraube 46.1 bzw. 46.2 an und übt auf diesen Druck aus, was zu einer Grobfixierung der Kugel 26 führt. Es kann auch auf den Kontaktkörper 44.1 bzw. 44.2 verzichtet werden. In einer solchen Ausführungsform würde die Grobfixierung alleine durch den Druckkörper 45.1 bzw. 45.2 und der Feststellschraube 46.1 bzw. 46.2 gewährleistet. Um die Sicherheit der Fixiervorrichtung 42.1 bzw. 42.2 zu verbessern, ist die Feststellschraube 46.1 bzw. 46.2 mit einem durchgehenden Innengewinde 47.1 bzw. 47.2 versehen. in diesem kann dann eine weitere Feststellschraube 48.1 bzw. 48.2 eingeschraubt werden, welche über den Kontaktkörper 49.1 bzw. 49.2 an der Kugel 26 angreift. Vorzugsweise wird der Kontaktkörper 49.1 bzw. 49.2 wie der Kontaktkörper 44.1 bzw. 44.2 aus einem elastischen Kunststoff hergestellt. Durch diese zusätzliche Konstruktion ist eine Feinfixierung der Kugel 26 möglich. Durch die gegenüberliegende Anordnung der Fixiervorrichtungen 42.1 und 42.2 kann eine hohe Sicherheit gegen unbeabsichtigtes Verstellen der durch den Benutzer vorgenommenen Einstellungen gewährleistet werden. Bei höheren Belastungen auf die Kugel 26 des Kugelgelenks 19 ist es denkbar, die Anzahl der Fixiervorrichtungen zu erhöhen, wobei diese jeweils gegeneinander angeordnet sind.

Die Anwendung eines solchen Kugelgelenkes 19 ist nicht nur auf eine Haltevorrichtung 1 beschränkt. So können Kugelgelenke dieser Art beispielsweise überall dort Anwendung finden, wo geringer Platz für das Fixiermittel vorhanden ist und trotzdem relativ hohe Lasten durch das Kugelgelenk aufgenommen werden müssen. Je nach Dimensionierung wäre auch ein Einsatz solcher Kugelgelenke im Gerüstbau denkbar (z. B. temporäre Reklameschilder, Tribünen etc.).

Zusammenfassend kann festgestellt werden, dass mit dieser Erfindung eine Haltevorrichtung 1 geschaffen wurde, welcher einfach im Aufbau und zuverlässig in der Anwendung ist. Des Weiteren bleibt die Haltevorrichtung 1 in dem gesamten Schwenkbereich ausbalanciert und kann bei Bedarf von jedem Benutzer selbst einfach angepasst werden.

## Patentansprüche

1. Haltevorrichtung (1) für einen Apparat, insbesondere für einen Bildschirm, welche eine Tragkonstruktion (3) umfasst, welche ein elastisches Element und eine Verstellvorrichtung (8) aufweist, welche entlang einer Verstellachse eine Verstellung eines Angriffspunktes des elastischen Elements ermöglicht, **dadurch gekennzeichnet, dass** die Verstellachse der Verstellvorrichtung (8) starr geneigt angeordnet ist und diese Verstellachse bezüglich einer Lotrechten einen Winkel einschliesst.

2. Haltevorrichtung nach Anspruch 1, **dadurch gekennzeichnet, dass** die Verstellachse der Verstellvorrichtung (8) bezüglich einer Lotrechten einen Winkel zwischen 30° und 75°, vorzugsweise im Bereich von 45° bis 60° einschliesst.

3. Haltevorrichtung nach einem der Ansprüche 1 oder 2, **dadurch gekennzeichnet, dass** die Verstellvorrichtung (8) an einem Befestigungselement (2) der Haltevorrichtung (1) angeordnet ist.

4. Haltevorrichtung nach Anspruch 3, **dadurch gekennzeichnet, dass** das Befestigungselement (2) so ausgebildet ist, dass die Haltevorrichtung (1) um eine vertikale Achse (7) schwenkbar ist.

5. Haltevorrichtung nach einem der Ansprüche 1 bis 4, **dadurch gekennzeichnet, dass** die Tragkonstruktion (3) aus zumindest zwei parallelogrammartig gekoppelten Armen (10, 11) gebildet ist.

6. Haltevorrichtung nach einem der Ansprüche 1 bis 5, **dadurch gekennzeichnet, dass** das elastische Element ein Federelement, insbesondere eine Spiralfeder (9) ist.

7. Haltevorrichtung nach Anspruch 6, **dadurch gekennzeichnet, dass** die Spiralfeder (9) vorgespannt ist.

8. Haltevorrichtung nach einem der Ansprüche 1 bis 7, **dadurch gekennzeichnet, dass** eine Befestigungsvorrichtung (20) zur Befestigung eines Apparats, insbesondere an einer Kugel (26) eines Kugelgelenks (19) vorgesehen ist.

9. Kugelgelenk (19) insbesondere für eine Haltevorrichtung nach einem der Ansprüche 1 bis 8, **dadurch gekennzeichnet, dass** es zumindest eine Fixiervorrichtung (27) zur Fixierung des Kugelgelenks (19) aufweist, welche zumindest aus zwei Elementen gebildet ist.

10. Kugelgelenk nach Anspruch 9, **dadurch gekennzeichnet, dass** zwei Druckkörper (32, 33) entgegengesetzt auf die Kugel (26) wirken.

11. Kugelgelenk (19) insbesondere für eine Haltevorrichtung nach einem der Ansprüche 1 bis 8, **dadurch gekennzeichnet, dass** es zumindest eine Fixiervorrichtung (42) zur Fixierung des Kugelgelenks (19) eine Grobfixierung und eine Feinfixierung ermöglicht.

12. Kugelgelenk nach Anspruch 11, **dadurch gekennzeichnet, dass** die Fixiervorrichtung (42)
a) einen ersten Druckkörper (45);
b) eine erste Schraube (46), welche mit einem inneren durchgehenden Bohrung (47) versehen ist und am ersten Druckkörper (45) angreift;
c) einen zweiten Druckkörper (49); und
d) eine zweite Schraube (48), welche durch die erste Schraube (46) am zweiten Druckkörper (49) angreift, umfasst.

13. Kugelgelenk nach Anspruch 12, **dadurch gekennzeichnet, dass** die Fixiervorrichtung (42) einen zusätzlichen Druckkörper (44) umfasst, welcher zwischen dem ersten Druckkörper (45) und der Kugel (26) angeordnet ist.

14. Kugelgelenk nach einem der Ansprüche 9 bis 13, **dadurch gekennzeichnet, dass** das Kugelgelenk (19) in zumindest einem Freiheitsgrad einen Festanschlag aufweist.
